# EUROPEAN PATENT SPECIFICATION

(11) **EP 4 039 720 B1**
(45) Date of publication and mention of the grant of the patent: **18.09.2024**
(21) Application number: 20873269.3
(22) Date of filing: 07.07.2020
(51) Int. Cl.: C08F 220/18, C08F 220/24, C08L 21/00, C08L 33/16, C08L 27/16

(54) **NON-ADHESIVE COMPOSITION**
NICHTHAFTENDE ZUSAMMENSETZUNG
COMPOSITION NON ADHÉSIVE

(30) Priority: 03.10.2019 JP 2019182877
(43) Date of publication of application: 10.08.2022
(73) Proprietor: Unimatec Co., Ltd., Tokyo 105-0012 (JP)
(72) Inventor: KANEUMI Yoshiyama, Kitaibaraki-shi, Ibaraki 319-1593 (JP); MIYATA Momoko, Kitaibaraki-shi, Ibaraki 319-1593 (JP); YOSHIDA Tamotsu, Kitaibaraki-shi, Ibaraki 319-1593 (JP)
(74) Representative: TBK
(86) International application number: PCT/JP2020/026579
(87) International publication number: WO 2021/065137

(56) References cited:
- EP-A1- 0 931 817
- WO-A1-2009/034773
- WO-A1-2013/058337
- JP-A- 2014 172 952
- JP-A- S61 281 112
- US-A1- 2005 202 997
- US-A1- 2016 251 468

## Description

### Technical Field

The present invention relates to a nonadhesive composition.

### Background Art

Conventionally, polymers having a perfluoroalkyl group have been expected to be used in various applications because they have excellent characteristics.

Patent Literature 1 (International Publication No. WO2004/035708) discloses a water and oil repellant composition including, as an essential component, a copolymer containing: a polymerization unit derived from a monomer (a) having a polyfluoroalkyl group, wherein the monomer (a) has a polyfluoroalkyl group, a melting point attributable to fine crystals derived from the polyfluoroalkyl group in a homopolymer of the monomer is not present or is 55°C or lower, and a glass transition temperature of the homopolymer is present and the glass transition temperature is 20°C or higher; and a polymerization unit derived from another monomer.

Patent Literature 2 (International Publication No. WO2009/034773) discloses a fluorine-containing copolymer of (a) a fluoroalkyl alcohol acrylic acid derivative or a corresponding methacrylic acid derivative, and of (b) an acrylic acid ester or a methacrylic acid ester, a monoalkyl ester or dialkyl ester of fumaric acid or maleic acid, or a vinyl ester.

Patent literature 3 (EP0931817A1) discloses in Example 1 a composition comprising one part by weight of a perfluoroalkyl group-containing polymer and 100 parts by weight of polypropylene. The perfluoroalkyl group-containing polymer comprises CH2=CH-CO-OCH₂CH₂(CF₂CF₂)ₙCF₂CF₃ (n=3 on the average) and polyoxyethylene acrylate.

### Document List

### Patent Literatures

Patent Literature 1: International Publication No. WO2004/035708
Patent Literature 2: International Publication No. WO2009/034773
Patent literature 3: EP0931817A1

### Summary of Invention

### Technical Problem

Among the polymers having a perfluoroalkyl group, a polymer in which the number of carbon atoms constituting the perfluoroalkyl group is 6 or lower has low bioaccumulation potential, and therefore its usefulness is attracting attention in various technical fields. The development of a composition containing a polymer having a perfluoroalkyl group with 6 or lower carbon atoms and another component has been studied.

Then, the present inventors have found that a composition including a copolymer with a specific structure having a perfluoroalkyl group with 6 or lower carbon atoms and a rubber component or a resin has excellent mold releasability and water and oil repellency, thereby completing the present invention. Accordingly, the present invention provides a nonadhesive composition having excellent mold releasability and water and oil repellency.

### Solution to Problem

The gist and configuration of the present invention is as follows.
[1] A nonadhesive composition including:
   a rubber component or a resin; and
   0.05 to 10 parts by mass of a fluorine-containing copolymer per 100 parts by mass of the rubber component or the resin,
   wherein the fluorine-containing copolymer is a copolymer of
   a fluoroalkyl alcohol (meth)acrylic acid derivative represented by CₙF₂ₙ₊₁(CH₂CF₂)ₐ(CF₂CF₂)_{b}(CH₂CH₂)_{c}OCOCR¹=CH₂, wherein R¹ represents a hydrogen atom or a methyl group, n represents an integer of 1 to 6, a represents an integer of 1 to 4, b represents an integer of 1 to 3, and c represents an integer of 1 to 3, and of
   a (meth)acrylic acid ester represented by R²OCOCR¹=CH₂, wherein R¹ represents a hydrogen atom or a methyl group, R² represents an alkyl group, an alkoxyalkyl group, a cycloalkyl group, an aryl group, or an aralkyl group; a monoalkyl ester or dialkyl ester of fumaric acid; or a monoalkyl ester or dialkyl ester of maleic acid.
[2] The nonadhesive composition according to the above [1], wherein a weight-average molecular weight of the fluorine-containing copolymer is 2000 to 50000.

### Effects of Invention

A nonadhesive composition having excellent mold releasability and water and oil repellency can be provided.

### Description of Embodiments

### (Nonadhesive composition)

A nonadhesive composition of the present invention includes: a rubber component or a resin; and 0.05 to 10 parts by mass of a fluorine-containing copolymer per 100 parts by mass of the rubber component or the resin. The fluorine-containing copolymer is a copolymer of the following monomers (a) and (b).
(a) a fluoroalkyl alcohol (meth)acrylic acid derivative represented by CₙF₂ₙ₊₁(CH₂CF₂)ₐ(CF₂CF₂)_{b}(CH₂CH₂)_{c}OCOCR¹=CH₂ (wherein R¹ represents a hydrogen atom or a methyl group, n represents an integer of 1 to 6, a represents an integer of 1 to 4, b represents an integer of 1 to 3, and c represents an integer of 1 to 3).
(b) a (meth)acrylic acid ester represented by R²OCOCR¹=CH₂ (wherein R¹ represents a hydrogen atom or a methyl group, R² represents an alkyl group, an alkoxyalkyl group, a cycloalkyl group, an aryl group, or an aralkyl group); a monoalkyl ester or dialkyl ester of fumaric acid; or a monoalkyl ester or dialkyl ester of maleic acid.

The "fluoroalkyl alcohol (meth)acrylic acid derivative" which is the monomer (a) represents a fluoroalkyl alcohol acrylic acid derivative or a fluoroalkyl alcohol methacrylic acid derivative. The "(meth)acrylic acid ester" which is the monomer (b) represents an acrylic acid ester or a methacrylic acid ester.

The nonadhesive composition of the present invention includes a perfluoroalkyl group CₙF₂ₙ₊₁ (wherein n represents an integer of 1 to 6) with 6 or lower carbon atoms in a fluorine-containing copolymer, and a rubber component or a resin. Since a perfluoroalkyl group with 6 or lower carbon atoms has low bioaccumulation, safety to the human body can be enhanced. Further, since the fluorine-containing copolymer includes hydrocarbon portions, the fluorine-containing copolymer is excellent in compatibility with the rubber component and the resin, and the fluorine-containing copolymer can also be uniformly dispersed or dissolved in the rubber component or the resin even when the fluorine-containing copolymer is contained in an amount of 0.05 to 10 parts by mass per 100 parts by mass of the rubber component or the resin. Therefore, for example, when the nonadhesive composition containing the rubber component and the fluorine-containing copolymer of the present invention is filled in a mold and then vulcanized for molding, the fluorine-containing copolymer exudes to the surface of the nonadhesive composition to form a low energy surface. Also, when the nonadhesive composition containing the resin and the fluorine-containing copolymer of the present invention is filled in a mold and then cross-linked polymerized, for example, for molding, the fluorine-containing copolymer exudes to the surface of the nonadhesive composition to form a low energy surface. As a result, the molded product produced by molding the nonadhesive composition can be easily taken out from the mold. Further, since the surface of the molded product produced has a low close adhesiveness to other materials, the molded product can have characteristics such as non-adhesiveness, water repellency, and oil repellency. Therefore, the molded product can be used for products that require these characteristics. More specifically, the molded product of the nonadhesive composition of the present invention can be used for rubber products such as a fluororubber, a natural rubber, a EPDM rubber, and an acrylic rubber, resin products such as an acrylic resin, a vinyl chloride resin, an epoxy resin, a polyurethane resin, and a phenol resin, and waterproof sealing materials (modified silicone), and used for imparting non-adhesive properties and water and oil repellency and stain prevention properties to the non-woven fabrics, and for internal mold release agents during molding, and the like.

Examples of the rubber component constituting the nonadhesive composition of the present invention include a fluororubber, a natural rubber, an EPDM rubber, a urethane rubber, an acrylic rubber, and a hydrin rubber. The fluororubber is not particularly limited, and examples include a vinylidene fluoride fluororubber (FKM), a tetrafluoroethylene-propylene fluororubber (FEPM), and a tetrafluoroethylene-perfluorovinyl ether fluororubber (FFKM). The rubber component may be either an uncross-linked or cross-linked rubber component, but it is preferable that the rubber component is a cross-linked rubber component. The cross-linked rubber component may be either a primary cross-linked or secondary cross-linked rubber component. The fluororubber is distinguished from the fluorine-containing copolymer of the present invention in that the fluororubber does not contain the monomer (b). Examples of the resin constituting the nonadhesive composition of the present invention include a fluororesin, an epoxy resin, a phenol resin, a melamine resin, a polyethylene resin, a polypropylene resin, a polyester resin, and a vinyl chloride resin. The fluororesin is distinguished from the fluorine-containing copolymer of the present invention in that the fluororesin does not contain the monomer (b).

The content of the fluorine-containing copolymer in the nonadhesive composition of the present invention is 0.05 to 10 parts by mass, preferably 0.05 to 5.0 parts by mass, more preferably 0.05 to 2.0 parts by mass, and even more preferably 0.05 to 1.0 parts by mass per 100 parts by mass of the rubber component or the resin. With the content of the fluorine-containing copolymer within the above range, the surface can be modified to be nonadhesive. The weight-average molecular weight of the fluorine-containing copolymer is preferably 2000 to 50000, more preferably 2000 to 20000, and even more preferably 3000 to 10000. With the weight-average molecular weight of the fluorine-containing copolymer within the above range, the nonadhesive fluorine-containing copolymer can move to the surface of the rubber component or the resin. The weight-average molecular weight Mw of the fluorine-containing copolymer can be measured by a Gel Permeation Chromatography (GPC).

The molar ratio between the monomers (a) and (b) constituting the fluorine-containing copolymer is not particularly limited, and for the monomer (a) : monomer (b) (molar ratio), 10 : 1 to 1 : 100 is preferable, 5 : 1 to 1 : 50 is more preferable, and 2 : 1 to 1 : 40 is even more preferable. With the molar ratio between the monomers (a) and (b) within the above range, the nonadhesive fluorine-containing copolymer can move to the surface of various rubber components or resin.

As n, a, b, and c in the monomer (a), n = 2 to 4 is preferable, n = 4 is more preferable, a = 1 to 2 is preferable, a = 2 is more preferable, b = 1 to 2 is preferable, and c = 1 to 2 is preferable. Specifically, examples of the monomer (a) include 3,3,4,4,5,5,6,6,7,7,9,9,10,10,11,11,12,12,12-nonadecafluorododecyl acrylate, 3,3,4,4,5,5,6,6,7,7,9,9,10,10,11,11,12,12,12-nonadecafluorododecyl methacrylate, and a monomer having the following structural formula.

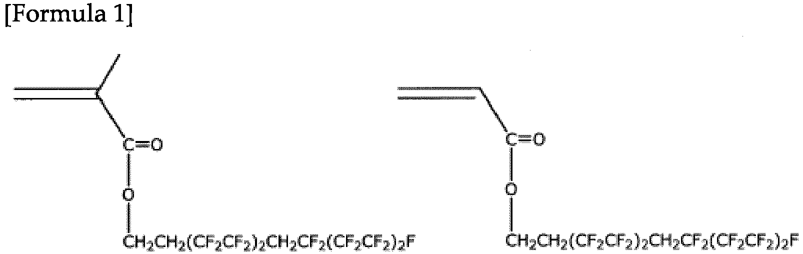

R² in the above monomer (b) in the fluorine-containing copolymer is an alkyl group, an alkoxyalkyl group, a cycloalkyl group, an aryl group, or an aralkyl group, and examples of R² include an alkyl group such as methyl, ethyl, propyl, isopropyl, n-butyl, n-hexyl, 2-ethylhexyl, n-octyl, lauryl, and stearyl, an alkoxyalkyl group such as methoxymethyl, 2-methoxyethyl, 2-ethoxyethyl, 2-butoxyethyl, and 3-ethoxypropyl, a cycloalkyl group such as cyclohexyl, an aryl group such as phenyl, and an aralkyl group such as benzyl. Examples of the monoalkyl ester or dialkyl ester of fumaric acid include monoalkyl esters or dialkyl esters, such as monomethyl, dimethyl, monoethyl, diethyl, monopropyl, dipropyl, monobutyl, dibutyl, mono(2-ethylhexyl), di(2-ethylhexyl), monooctyl, and dioctyl esters, of fumaric acid. Examples of the monoalkyl ester or dialkyl ester of maleic acid include monoalkyl esters or dialkyl esters, such as monomethyl, dimethyl, monoethyl, diethyl, monopropyl, dipropyl, monobutyl, dibutyl, mono(2-ethylhexyl), di(2-ethylhexyl), monooctyl, and dioctyl esters, of maleic acid. Specifically, examples of the monomer (b) include a vinyl ester such as 2-ethylhexyl methacrylate, lauryl methacrylate, cetyl methacrylate, stearyl methacrylate, behenyl methacrylate, cyclohexyl acrylate, lauryl acrylate, cetyl acrylate, stearyl acrylate, behenyl acrylate, vinyl acetate, and vinyl caprylate, and a monomer having a structural formula represented by the following formula.

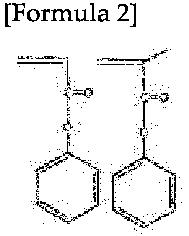

The rubber component may include a cross-linking agent, a cross-linking accelerator, an acid receiving agent, a filler and the like, as an additive other than rubber. The resin may include a polymerization initiator, a filler, and the like.

The monomer (a) can be produced by an esterification reaction of an fluoroalkyl alcohol with acrylic acid or methacrylic acid. The fluoroalkyl alcohol can be produced from the corresponding fluoroalkyl iodide. A fluoroalkyl alcohol can be produced by first reacting fluoroalkyl iodide with N-methylformamide HCONH(CH₃) to form a mixture of fluoroalkyl alcohol and its formate, and then hydrolyzing the mixture in the presence of an acid catalyst.

The fluorine-containing copolymer of the present invention can be prepared, for example, as follows. That is, a polymerization reaction of the monomer (a) and (b) is performed in the following solvents: fluorine-containing organic solvents such as 1,4-bis(trifluoromethyl)benzene, 1,1,1,2,2-pentafluoro-3,3-dichloropropane, 1,1,2,2,3-pentafluoro-1,3-dichloropropane, 1,1,1,2,3,4,4,5,5,5-decafluoropentane, and perfluorohexane; ester solvents such as methyl acetate, ethyl acetate, propyl acetate, butyl acetate, and methyl acetate propionate; ketone solvents such as acetone, methyl ethyl ketone, methyl isobutyl ketone, 2-pentanone, 3-pentanone, and 2-hexanone; and solvents such as acetonitrile, dimethylformamide, diethylformamide, dimethylacetamide, and N-methyl-2-pyrrolidone.

When performing the polymerization reaction of the fluorine-containing copolymer, preferably 0.1 to 4 parts by mass of a polymerization initiator or more preferably 1 to 2 parts by mass of a polymerization initiator per 100 parts by mass of the total amount of (a) and (b) can be used. As the polymerization initiator, diacyl peroxides, peroxycarbonates, peroxy esters and the like can be used. More specifically, as the polymerization initiator, organic peroxides such as isobutyl peroxide, lauroyl peroxide, stearoyl peroxide, succinic acid peroxide, bis(heptafluorobutyryl) peroxide, pentafluorobutyroyl peroxide, bis(4-tert-butylcyclohexyl) peroxydicarbonate, di-n-propyl peroxydicarbonate, and diisopropyl peroxydicarbonate, azo compounds such as azobisisobutyronitrile, inorganic peroxides, or their redox materials can be used. If necessary, the polymerization initiators may be added in the middle of the polymerization reaction.

A chain transfer agent can also be used as necessary to regulate the weight-average molecular weight of the fluorine-containing copolymer. Examples of the chain transfer agent include n-dodecyl mercaptan, dimethyl ether, methyl tert-butyl ether, C1 to C6 alkanes, methanol, ethanol, 2-propanol, cyclohexane, carbon tetrachloride, chloroform, dichloromethane, methane, ethyl acetate, ethyl maronate, and acetone.

The copolymerization reaction for obtaining the fluorine-containing copolymer can be performed at a temperature of preferably 0 to 100°C, more preferably 5 to 60°C, and even more preferably 40 to 50°C. Typically, after the end of the polymerization reaction, a copolymer solution having a solid content concentration of 5 to 50% by mass is obtained, and by removing the solvent from the copolymer solution, the fluorine-containing copolymer can be obtained. By a method of evaporating and drying the copolymer solution, a method of adding a flocculant such as inorganic salts to the copolymer solution to flocculate the fluorine-containing copolymer, and the like, the fluorine-containing copolymer is separated from the copolymer solution, and is then purified by a method of washing with a solvent or the like.

### (Method for producing nonadhesive composition)

The nonadhesive composition of the present invention can be obtained by mixing the fluorine-containing copolymer prepared as described above with a rubber component or a resin. The nonadhesive composition of the present invention may be obtained by mixing the raw materials of a rubber component or a resin with the fluorine-containing copolymer, and then performing a treatment such as vulcanization and heating.

Although the embodiments of the present invention have been described above, the present invention is not limited to the above embodiments, and includes all aspects included in the concept and claims of the present invention, and the present invention can be modified within the scope of the present invention.

### Examples

Next, examples will be described in order to further clarify the effect of the present invention, but the present invention is not limited to these examples.

### <Preparation of fluorine-containing copolymer>

A fluorine-containing copolymer was prepared as follows.

### (Fluorine-containing copolymer 1)

1.7 g of DTFAC-103 (3,3,4,4,5,5,6,6,7,7,9,9,10,10,11,11,12,12,12-nonadecafluorododecyl acrylate; monomer (a)), 32.9 g of StAc (stearyl acrylate; monomer (b)), 46.8 g of MEK (methyl ethyl ketone; a solvent), 1.5 g of AIBN (azobisisobutyronitrile; a polymerization initiator) and 1.7 g of NDMC (n-dodecyl mercaptan; a chain transfer agent) were placed in a 200 ml glass reactor equipped with a condenser and a thermometer, and the mixture was stirred at 68°C for 16 hours for polymerization reaction of DTFAC-103 and StAc, to give 81.5 g of a copolymer solution with 40.5% by mass of solid content concentration. The obtained copolymer solution was subjected to reprecipitation in methanol, and the solvent was removed in an oven at 120°C to obtain a fluorine-containing copolymer 1 in which the monomers thereof are DTFAC-103 and StAc. The weight-average molecular weight Mw of the obtained fluorine-containing copolymer 1 measured by GPC was 8200. The amounts of the raw materials blended, the amount of the copolymer solution recovered, the solid content concentration of the copolymer solution, and the weight-average molecular weight of the fluorine-containing copolymer 1 are shown in Table 1.

### (Fluorine-containing copolymers 2 to 7)

The fluorine-containing copolymers 2 to 7 were prepared in the same manner as in the case of the fluorine-containing copolymer 1 except that the amounts of the raw materials blended and kind of the raw materials were changed as shown in Table 1. The amount of the copolymer solution recovered, the solid content concentration of the copolymer solution, and the weight-average molecular weight of the fluorine-containing copolymers 2 to 7, when they were prepared, are shown in Table 1.

**[Table 1]**

| | Monomer (a) | | Monomer (b) | | Solvent | | Polymerization initiator | | Chain transfer agent | | Amount of copolymer solution recovered (g) | Solid content concentration of copolymer solution (mess%) | Weig ht-average molecular weight of fluorine-containing copolymer (-) |
|---|---|---|---|---|---|---|---|---|---|---|---|---|---|
| | Kind | Amount of charge (g) | Kind | Amount of charge (9) | Kind | Amount of charge (g) | Kind | Amount of charge (g) | Kind | Amount of charge (g) | | | |
| Fluorine-containing copolymer 1 | DTFAC-103 | 1.7 | StAc | 32.9 | MEK | 46.8 | AIBN | 1.5 | NDMC | 1.7 | 81.5 | 40.5 | 8200 |
| Fluorine-containing copolymer 2 | DTFAC-103 | 3.5 | StAc | 31.1 | MEK | 62.2 | AIBN | 1.5 | NDMC | 1.7 | 98.7 | 34.1 | 5200 |
| Fluorine-containing copolymer 3 | DTFAC-103 | 6.9 | StAc | 27.7 | MEK | 62.2 | AIBN | 1.5 | NDMC | 1.7 | 98.3 | 34 | 5000 |
| Fluorine-containing copolymer 4 | DTFAC-103 | 10.4 | StAc | 24.2 | MEK | 62.2 | AIBN | 1.5 | NDMC | 1.7 | 96.6 | 34.8 | 5600 |
| Fluorine-containing copolymer 5 | DTFAC-103 | 16 | StAc | 24 | MEK | 56.8 | AIBN | 1.5 | NDMC | 1.7 | 98 | 40.6 | 6400 |
| Fluorine-containing copolymer 6 | DTFMAC-103 | 2 | StAc | 38 | MEK | 56.8 | AIBN | 1.5 | NDMC | 1.7 | 97.6 | 40 | 6000 |
| Fluorine-containing copolymer 7 | DTFMAC-103 | 16 | StAc | 24 | MEK | 63 | AIBN | 1.5 | NDMC | 3.4 | 97 | 40.2 | 3300 |

| | | | | | | | | | | | | | |
|---|---|---|---|---|---|---|---|---|---|---|---|---|---|
| Symbols shown in Table 1 represent the following materials. DTFAC-103: 3,3,4,4,5,5,6,6,7,7,9,9,10,10,11,11,12,12,12-nonadecafluorododecyl acrylate (monomer (a)), DTFMAC-103: 3,3,4,4,5,5,6,6,7,7,9,9,10,10,11,11,12,12,12-nonadecafluorododecyl methacrylate (monomer (a)), StAc: stearyl acrylate (monomer (b)), MEK: methyl ethyl ketone (solvent), AIBN: Azobisisobutyronitrile (polymerization initiator), NDMC: n-dodecyl mercaptan (chain transfer agent). | | | | | | | | | | | | | |

### (Examples 1 to 7 and Comparative Examples 1 to 2)

Materials in amounts blended shown in Table 2 below were kneaded with an open roll to obtain a kneaded product. Mooney viscosity measurement was performed for the obtained kneaded product, and the scorch time (t5) at 125°C was measured according to ISO 289. Then, after press vulcanization (primary vulcanization) was performed at 180°C for 10 minutes, oven vulcanization (secondary vulcanization) was performed at 230°C for 22 hours. For each of the cross-linked molded article obtained in these manners, the compression set at 200°C for 70 hours was measured with a P-24 O-ring according to ASTM D395 Method B. In addition, hardness, breaking strength and elongation at break were measured according to ISO 37 and ISO 7619-1 Type 1A. The vulcanization conditions and the above measurement results are shown in Table 2.

Further, after obtaining the kneaded product of each example as described above, an evaluation test of mold releasability was performed as follows. After putting the above kneaded product in an O-ring mold of a mold release evaluating apparatus, primary vulcanization was performed at 205°C for 3 minutes. The mold releasability of the cross-linked molded product upon taking out the cross-linked molded product after the primary vulcanization from the mold was visually evaluated according to the following criteria. Good: There was no sticking of the cross-linked molded product inside the mold or no damage to the cross-linked molded product, and the cross-linked molded product was able to be smoothly released from the mold.
Fair: Although some adhesion of the cross-linked molded product inside the mold was observed, it was possible to release the cross-linked molded product from the mold.
Poor: Upon release of the cross-linked molded product from the mold, the cross-linked molded product was significantly damaged, and it was difficult to release the cross-linked molded product.

The evaluation results of mold releasability are shown in Table 2 below.

**[Table 2]**

| | | Example 1 | Example 2 | Example 3 | Example 4 | Example 5 | Example 6 | Example 7 | Corrparative Example 1 | Corparative Example 2 |
|---|---|---|---|---|---|---|---|---|---|---|
| Amount blended (parts by mass) | Fluororubber copolymer (FKM) | 100 | 100 | 100 | 100 | 100 | 100 | 100 | 100 | 100 |
| | MT carbon black | 25 | 25 | 25 | 25 | 25 | 25 | 25 | 25 | 25 |
| | Bisphenol AF | 2.3 | 2.3 | 2.3 | 2.3 | 2.3 | 2.3 | 2.3 | 2.3 | 2.3 |
| | Calcium hydroxide | 3 | 3 | 3 | 3 | 3 | 3 | 3 | 3 | 3 |
| | Magnesium oxide | 5 | 5 | 5 | 5 | 5 | 5 | 5 | 5 | 5 |
| | Benzyltriphenylphosphonium chloride | 0.5 | 0.5 | 0.5 | 0.5 | 0.5 | 0.5 | 0.5 | 0.5 | 0.5 |
| | Fluorine-containing copolymer 1 | 1 | | | | | | | | |
| | Fluorine-containing copolymer 2 | | 1 | | | | | | | |
| | Fluorine-containing copolymer 3 | | | 1 | | | | | | |
| | Fluorine-containing copolymer 4 | | | | 1 | | | | | |
| | Fluorine-containing copolymer 5 | | | | | 1 | | | | |
| | Fluorine-containing copolymer 6 | | | | | | 1 | | | |
| | Fluorine-containing copolymer 7 | | | | | | | 1 | | |
| | Fluorine-based processing aid FPA-1 (by SOLVAY) | | | | | | | | | 1 |
| Vulcanization condition | | | | | | | | | | |
| Mooney viscosity measurement of composition before vulcanization; scorch time (t5) (min) | | 269 | 26.4 | 26.0 | 29.4 | 27.5 | 26.5 | 26.7 | 25.8 | 24.7 |
| Primary vulcanization condition (vulcanization temperature (°C); vulcanization time (min)) | | 180:10 | 180:10 | 180:10 | 180:10 | 180:10 | 180:10 | 180:10 | 180:10 | 180:10 |
| Secondary vulcanization condition (vulcanization temperature (°C); vulcanization time (mm)) | | 230:22 | 230:22 | 230:22 | 230:22 | 230:22 | 230:22 | 230:22 | 230:22 | 230:22 |
| Physical properties of rubber | | | | | | | | | | |
| compression set (%) | | 20 | 19 | 19 | 19 | 20 | 20 | 20 | 16 | 19 |
| Hardness (Shore A) | | 70 | 70 | 71 | 71 | 69 | 69 | 69 | 70 | 70 |
| Breaking strength (Mpa) | | 16.7 | 16.4 | 16.3 | 15.4 | 15.8 | 15.4 | 15.1 | 17.4 | 16.0 |
| Elongation at break (%) | | 210 | 220 | 210 | 200 | 210 | 220 | 230 | 220 | 210 |
| Mold releasability | | Good | Good | Good | Good | Good | Good | Good | Poor | Fair |

From the results in Table 2, it can be seen that the nonadhesive composition of the present invention has excellent mold releasability. In contrast, with the composition of Comparative Example 1, which does not contain the fluorine-containing copolymer of the present invention, the mold releasability was "Poor". Further, with the composition of Comparative Example 2, which contains a fluorine-based processing aid having a chemical structure different from that of the fluorine-containing copolymer of the present invention, the mold releasability was "Fair".

### (Example 8)

100 parts by mass of polyurethane prepolymer heated to 80°C (CORONATE (R) C-4090 (trade name); manufactured by Nippon Polyurethane Industry Co., Ltd.), 12.8 parts by mass of methylenebis-o-chloroaniline curing agent (IHARACUAMIN-MT (trade name); manufactured by Kumiai Chemical Industry Co., Ltd.) which was heat melted and 1.0 part by mass of the fluorine-containing copolymer 1 prepared above were mixed and stirred while preventing the inclusion of bubbles to give a mixture. Then, the mixture was injected into an aluminum mold (45 mm diameter, 50 mm depth). A hook for taking out the cured molded article was set up in the center of the space of the mold, and after the mixture was heat-cured at 120°C for 1 hour, the hook was pulled to take out the obtained molded article from the mold. The mold release load at this time was 15 N.

The mixture obtained by stirring and mixing each material in the same manner as in Example 8 was applied to a stainless steel plate (2 × 5 cm), and then the mixture was heat-cured at 120°C for 1 hour. For the obtained test pieces, the static contact angle and the dynamic contact angle (by the Sessil Drop method), which are one index of the water and oil repellency, were measured for water and hexadecane. The measurement results of water repellency and oil repellency are shown below.
Water repellency: water static contact angle 112°, water sliding angle (dynamic contact angle) 4°
Oil repellency: hexadecane static contact angle 40°, hexadecane sliding angle (dynamic contact angle) 2°.

### (Comparative Example 3)

100 parts by mass of polyurethane prepolymer heated to 80°C (CORONATE (R) C-4090 (trade name); manufactured by Nippon Polyurethane Industry Co., Ltd.) and 12.8 parts by mass of methylenebis-o-chloroaniline curing agent (IHARACUAMIN-MT (trade name); manufactured by Kumiai Chemical Industry Co., Ltd.) which was heat melted were mixed and stirred while preventing the inclusion of bubbles to give a mixture. The mixture was injected into an aluminum mold (45 mm diameter, 50 mm depth). A hook for taking out the cured molded article was set up in the center of the space of the mold, and after the mixture was heat-cured at 120°C for 1 hour, the hook was pulled to take out the obtained molded article from the mold. The mold release load at this time was 100 N or more, and the molded article was not able to be taken out from the mold.

In the same manner as in Example 8, the mixture of Comparative Example 3 was applied to a stainless steel plate (2 × 5 cm), and then the mixture was heat-cured at 120°C for 1 hour. For the obtained test pieces, the static contact angle and the dynamic contact angle (by the Sessil Drop method), which are one index of the water and oil repellency, were measured for water and hexadecane. The measurement results of water repellency and oil repellency are shown below.
Water repellency: water static contact angle 69°, water sliding angle (dynamic contact angle) 54°
Oil repellency: hexadecane static contact angle 8°, hexadecane sliding angle (dynamic contact angle): was not able to be measured because hexadecane adhered to the surface of the test piece.

From the above Example 8 and Comparative Example 3, it can be seen that the nonadhesive composition of the present invention has a low mold release load and excellent mold releasability. Further, in Example 8, compared with Comparative Example 3, the water static contact angle was larger, the water dynamic contact angle was smaller, the hexadecane static contact angle was larger, and there was no adhesion of hexadecane to the test piece at the time of measuring the hexadecane dynamic contact angle. Therefore, it can be seen that the molded article of the nonadhesive composition of the present invention is excellent in water and oil repellency.

## Claims

1. A nonadhesive composition comprising:
a rubber component or a resin; and
0.05 to 10 parts by mass of a fluorine-containing copolymer per 100 parts by mass of the rubber component or the resin,
wherein the fluorine-containing copolymer is a copolymer of
a fluoroalkyl alcohol (meth)acrylic acid derivative represented by CₙF₂ₙ₊₁(CH₂CF₂)ₐ(CF₂CF₂)_{b}(CH₂CH₂)_{c}OCOCR¹=CH₂, wherein R¹ represents a hydrogen atom or a methyl group, n represents an integer of 1 to 6, a represents an integer of 1 to 4, b represents an integer of 1 to 3, and c represents an integer of 1 to 3, and of
a (meth)acrylic acid ester represented by R²OCOCR¹=CH₂, wherein R¹ represents a hydrogen atom or a methyl group, R² represents an alkyl group, an alkoxyalkyl group, a cycloalkyl group, an aryl group, or an aralkyl group; a monoalkyl ester or dialkyl ester of fumaric acid; or a monoalkyl ester or dialkyl ester of maleic acid.

2. The nonadhesive composition according to claim 1, wherein a weight-average molecular weight of the fluorine-containing copolymer is 2000 to 50000, measured by gel permeation chromatography.

## Patentansprüche

1. Nicht klebende Zusammensetzung, umfassend:
eine Kautschukkomponente oder ein Harz; und
0,05 bis 10 Masseteile eines fluorhaltigen Copolymers pro 100 Masseteile der Kautschukkomponente oder des Harzes,
wobei das fluorhaltige Copolymer ein Copolymer ist aus
einem Fluoralkylalkohol-(meth)acrylsäurederivat, dargestellt durch CₙF₂ₙ₊₁(CH₂CF₂)ₐ(CF₂CF₂)_{b}(CH₂CH₂)_{c}OCOCR¹=CH₂, wobei R¹ ein Wasserstoffatom oder eine Methylgruppe darstellt, n eine ganze Zahl von 1 bis 6 darstellt, a eine ganze Zahl von 1 bis 4 darstellt, b eine ganze Zahl von 1 bis 3 darstellt und c eine ganze Zahl von 1 bis 3 darstellt, und aus
einem (Meth)acrylsäureester, dargestellt durch R²OCOCR¹=CH₂, wobei R¹ ein Wasserstoffatom oder eine Methylgruppe darstellt, R² eine Alkylgruppe, eine Alkoxyalkylgruppe, eine Cycloalkylgruppe, eine Arylgruppe oder eine Aralkylgruppe darstellt; einem Monoalkylester oder Dialkylester der Fumarsäure; oder einem Monoalkylester oder Dialkylester der Maleinsäure.

2. Nichtklebende Zusammensetzung nach Anspruch 1, wobei das gewichtsmittlere Molekulargewicht des fluorhaltigen Copolymers 2000 bis 50000 beträgt, gemessen mit Gelpermeationschromatographie.

## Revendications

1. Composition non adhésive comprenant :
un composant en caoutchouc ou une résine ; et
0,05 à 10 parties en masse d'un copolymère contenant du fluor pour 100 parties en masse du composant en caoutchouc ou de la résine,
dans laquelle le copolymère contenant du fluor est un copolymère de
un dérivé de l'acide (méth)acrylique de l'alcool fluoroalkyle représenté par CₙF₂ₙ₊₁(CH₂CF₂)ₐ(CF₂CF₂)_{b}(CH₂CH₂)_{c}OCOCR¹=CH₂, dans lequel R¹ représente un atome d'hydrogène ou un groupe méthyle, n représente un nombre entier de 1 à 6, a représente un nombre entier de 1 à 4, b représente un nombre entier de 1 à 3, et c représente un nombre entier de 1 à 3, et de
un ester de l'acide (méth)acrylique représenté par R²OCOCR¹=CH₂, dans lequel R¹ représente un atome d'hydrogène ou un groupe méthyle, R² représente un groupe alkyle, un groupe alcoxyalkyle, un groupe cycloalkyle, un groupe aryle ou un groupe aralkyle ; un ester monoalkyle ou un ester dialkyle de l'acide fumarique ; ou un ester monoalkyle ou un ester dialkyle de l'acide maléique.

2. Composition non adhésive selon la revendication 1, dans laquelle un poids moléculaire moyen en poids du copolymère contenant du fluor est de 2 000 à 50 000, mesuré par chromatographie par perméation de gel.
